# FASCICULE DE BREVET EUROPEEN

(11) **EP 0 812 077 B1**
(45) Date de publication et mention de la délivrance du brevet: **26.01.2005**
(21) Numéro de dépôt: 97401180.1
(22) Date de dépôt: 29.05.1997
(51) Int. Cl.: H04J 3/14, H04J 14/02

(54) **Terminal pour une liaison bidirectionnelle sécurisée acheminant des données multiplexées selon la hiérarchie numérique synchrone**
Endgerät für eine gesicherte bidirektionale, nach der synchronen digitalen Hierarchie multiplexierte Daten übermittelnde Verbindung
Terminal equipment for a secure bidirectional communication link carrying data multiplexed according to the synchronous digital hierarchy

(30) Priorité: 06.06.1996 FR 9606988
(43) Date de publication de la demande: 10.12.1997
(73) Titulaire: Alcatel Submarine Networks, 92110 Clichy (FR)
(72) Inventeur: Lemaire, Alain, 75014 Paris (FR)
(74) Mandataire: Sciaux, Edmond

(56) Documents cités:
- EP-A- 0 456 206
- GB-A- 2 282 034
- GRUBER J G: "PERFORMANCE AND FAULT MANAGEMENT FUNCTIONS FOR THE MAINTENANCE OF SONET/SDH AND ATM TRANSPORT NETWORKS" PROCEEDINGS OF THE INTERNATIONAL CONFERENCE ON COMMUNICATIONS (ICC), GENEVA, MAY 23 - 26, 1993, vol. 3 OF 3, 23 mai 1993, INSTITUTE OF ELECTRICAL AND ELECTRONICS ENGINEERS, pages 1308-1314, XP000448355
- TRISCHITTA P ET AL: "THE TAT-12/13 CABLE NETWORK" IEEE COMMUNICATIONS MAGAZINE, vol. 34, no. 2, 1 février 1996, pages 24-28, XP000554538

## Description

L'invention concerne un terminal pour une liaison bidirectionnelle sécurisée acheminant des données multiplexées selon la hiérarchie numérique synchrone dite SDH. Un tel terminal est relié à un autre terminal analogue par deux lignes de transmission, respectivement pour l'émission vers l'autre terminal et pour la réception en provenance de l'autre terminal. Il est utilisable notamment pour la transmission sous-marine sur un câble à fibre optique telle que décrite dans le document XP000554538 cité dans le rapport de recherche européenne. La transmission d'informations sur une ligne terrestre a libre optique met en oeuvre généralement la hiérarchie numérique synchrone, appelée couramment SDH. La transmission sous-marine nécessite de multiplexer une pluralité de multiplex SDH et des signaux de service propres à la transmission sous-marine. Les deux extrémités d'une liaison sous-marine comportent généralement chacune deux terminaux de réception SDH, deux terminaux d'émission SDH, et un terminal de liaison sous-marine.

Chaque terminal de réception SDH reçoit une pluralité de multiplex SDH, fournis par des lignes terrestres, et les multiplexe sous la forme de deux multiplex SDH identiques, d'ordre supérieur, qu'il fournit au terminal de liaison sous-marine. Chaque terminal d'émission SDH reçoit deux multiplex SDH identiques fournis par le terminal de liaison sous-marine. Il les démultiplexe partiellement et fournit une pluralité de multiplex SDH, d'ordre inférieur, à des lignes terrestres.

Lorsque le terminal d'émission SDH ne reçoit plus l'un des deux multiplex que doit lui fournir le terminal de liaison sous-marine, il fournit un signal propre à ce multiplex et appelé signal de défaillance à l'extrémité éloignée de la liaison, ce signal permettant de diagnostiquer une panne affectant les moyens situés à l'autre extrémité de la liaison. Un tel signal est référencé FERF (Far End Remote Failure), par exemple. La norme SDH prévoit des bits dans chaque trame des multiplex SDH d'ordre seize, pour le transport de ce signal. Ce signal prend la valeur 110 en cas de panne.

Chaque terminal de liaison sous-marine comporte :
- deux dispositifs d'émission;
- un commutateur permettant de sélectionner l'un des deux multiplex fournis respectivement par les deux dispositifs d'émission, et l'émettre sur une liaison sous-marine, sous la forme optique;
- un dispositif de recopie recevant, sous forme optique, un multiplex fourni par une ligne de transmission sous-marine et le restituant sous la forme de deux multiplex identiques fournis respectivement aux deux terminaux d'émission SDH (Le dispositif de recopie restitue de préférence deux signaux optiques , mais il pourrait aussi bien restituer deux signaux électriques).

Un dispositif connu, pour commander le commutateur du terminal de liaison sous-marine, comporte des terminaux d'émision SDH modifiés par rapport aux terminaux SDH disponibles couramment dans le commerce. Chaque terminal de liaison sous-marine étant relié à plusieurs terminaux d'émission SDH qui produisent chacun un signal FERF, il est nécessaire de prévoir un dispositif logique pour décider un basculement du commutateur en fonction de tous les signaux FERF fournis par ces terminaux SDH, et de prévoir une interface adaptée à la commande du commutateur situé dans le terminal de la liaison sous-marine. Les terminaux d'émission SDH disponibles dans le commerce ne comportent pas ces dispositifs, ils ne peuvent donc pas être utilisés sans modification.

Le terminal de la liaisons sous-marine et les terminaux SDH étant des identités physiquement séparées, il est nécessaire en outre de les relier pour acheminer le signal de commande du commutateur. Cela impose de placer les terminaux d'émission SDH à faible distance du terminal de liaison sous-marine, ou alors de prévoir des régénérateurs sur la liaison transmettant les signaux de commande du commutateur. Ce dispositif connu présente donc des inconvénients:
- La nécessité de modifier des terminaux d'émission SDH classiques, disponibles dans le commerce mais non prévus pour commander un tel commutateur.
- Le délais de réaction en cas de défaillance, c'est à dire le délais de basculement du commutateur, dépend des caractéristiques des terminaux d'émission SDH, et pas seulement des caractéristiques normalisées de la liaison.
- La nécessité d'une liaison supplémentaire comportant des régénérateurs, si l'on souhaite placer le terminal de la liaison sous-marine à une distance importante par rapport aux terminaux SDH.

Le but de l'invention est de proposer un terminal pour une liaison bidirectionnelle sécurisée, notamment une liaison sous-marine, ne présentant pas ces inconvénients.

L'objet de l'invention est un terminal pour une liaison bidirectionnelle sécurisée acheminant des données multiplexées selon la hiérarchie numérique synchrone, dite SDH, ce terminal étant relié à un second terminal analogue par une première et une seconde ligne de transmission respectivement pour l'émission vers le second terminal et pour la réception en provenance du second terminal;
caractérisé en ce qu'il comporte :
- deux dispositifs d'émission recevant chacun n premiers et n deuxièmes multiplex SDH, n étant supérieur ou égal à un, chacun de ces multiplex SDH transportant respectivement n premiers et n deuxièmes signaux dits de défaillance à l'extrémité éloignée de la liaison permettant de diagnostiquer une panne affectant des moyens au niveau du second terminal; chaque dispositif d'émission comportant :
   -- des moyens pour extraire, de chacun de ces n premiers et n deuxièmes multiplex SDH, respectivement n premiers et n deuxièmes signaux de défaillance à l'extrémité éloignée de la liaison;
   -- des moyens pour fournir un multiplex susceptible d'être émis sur la première ligne, en multiplexant : les n premiers et n deuxièmes multiplex reçus par ce dispositif d'émission, et des données de service propres à la liaison sécurisée, en insérant dans ces données n troisièmes et n quatrièmes signaux de défaillance à l'extrémité éloignée de la liaison permettant de diagnostiquer une panne affectant des moyens au niveau du second terminal, ces 2n derniers signaux étant extraits par l'autre dispositif d'émission ;
- un commutateur pour transmettre à la première ligne l'un des deux multiplex fournis respectivement par les deux dispositifs d'émission ;
- deux dispositifs de réception ayant chacun :
   -- une entrée couplée à la seconde ligne pour recevoir un même multiplex transmis par cette seconde ligne, ce multiplex reçu transportant : n troisièmes et n quatrièmes multiplex SDH comportant respectivement n cinquièmes et n sixièmes signaux de défaillance à l'extrémité éloignée de la liaison permettant de diagnostiquer une panne affectant des moyens au niveau du terminal; et des données de service propres à la liaison sécurisée, ces données comportant n septièmes et n huitièmes signaux de défaillance à l'extrémité éloignée de la liaison permettant de diagnostiquer une panne affectant des moyens au niveau du terminal;
   -- des moyens pour extraire, du multiplex reçu, les n troisièmes et n quatrièmes multiplex SDH et pour extraire les n cinquièmes, les n sixièmes, les n septièmes, et les n huitièmes signaux de défaillance ;
- et un dispositif logique pour recevoir les 4n signaux de défaillance fournis par chacun des deux dispositifs de réception et en déduire un signal de commande du commutateur.

Le terminal ainsi caractérisé présente l'avantage d'être utilisable immédiatement avec des dispositifs d'émission SDH et des dispositifs de réception SDH couramment disponibles dans le commerce, puisque le commutateur est commandé par des moyens qui sont internes au terminal et totalement indépendants des dispositifs SDH. Les trames SDH ne sont pas du tout modifiées. En outre, le temps de réaction pour basculer le commutateur est tout à fait indépendant des caractéristiques de ces dispositifs de réceception SDH.

Selon un mode de réalisation préférentiel, les moyens pour multiplexer les n premiers, les n deuxièmes multiplex, et des données de service en un multiplex susceptible d'être émis sur la première ligne, en y insérant n troisièmes et n quatrièmes signaux, insèrent en outre les n premiers et les deuxièmes signaux parmi les données de service propres à la liaison sécurisée.

Le terminal ainsi caractérisé présente l'avantage de transmettre les 4n signaux de défaillance sous la même forme, c'est-à-dire dans les données de service propres à la liaison sécurisée. Le terminal homologue reçoit donc ces 4n signaux exactement sous la même forme, quelle que soit la position du commutateur dans le terminal qui les a émis. Autrement dit, le terminal homologue ne constate aucun changement du mode de transmission de ces 4n signaux en cas de basculement du commutateur. La gestion de ces signaux par ce terminal homologue est donc simplifiée.

L'invention sera mieux comprise et d'autres caractéristiques apparaîtront à l'aide de la description ci-dessous et des figures l'accompagnant :
- les figures 1a, 1b représentent le schéma synoptique d'un exemple de liaison sous-marine bidirectionnelle sécurisée comportant deux terminaux selon l'invention ;
- la figure 2 représente le schéma synoptique plus détaillé d'un dispositif d'émission que comporte un terminal de liaison sous-marine, de cet exemple de réalisation ;
- et la figure 3 représente le schéma synoptique plus détaillé d'un dispositif de réception que comporte un terminal de liaison sous-marine, de cet exemple de réalisation.

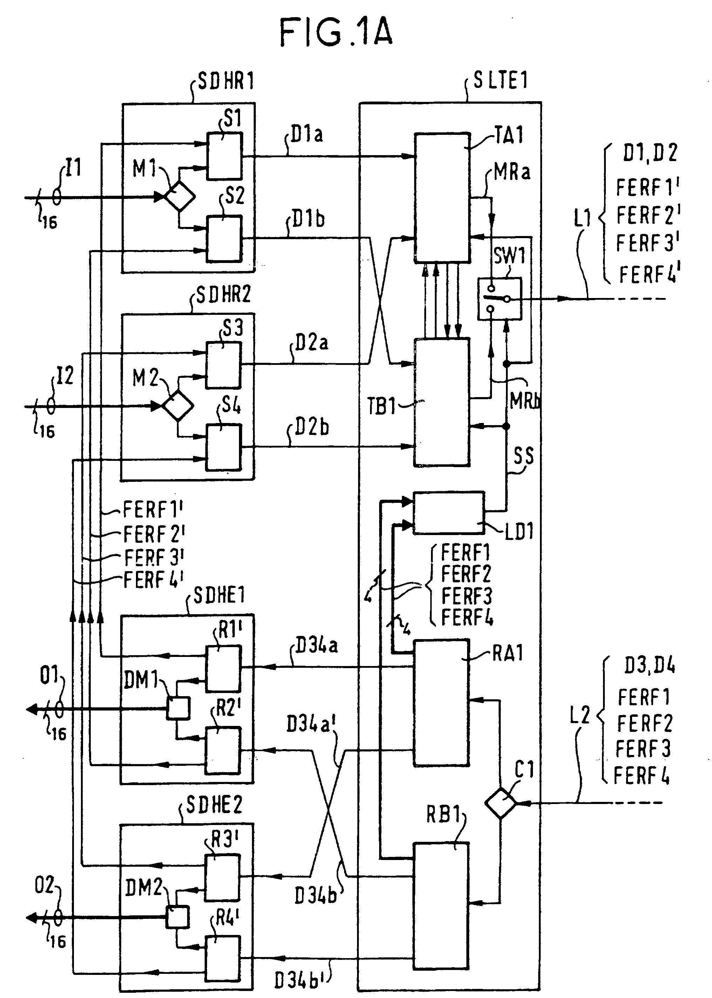

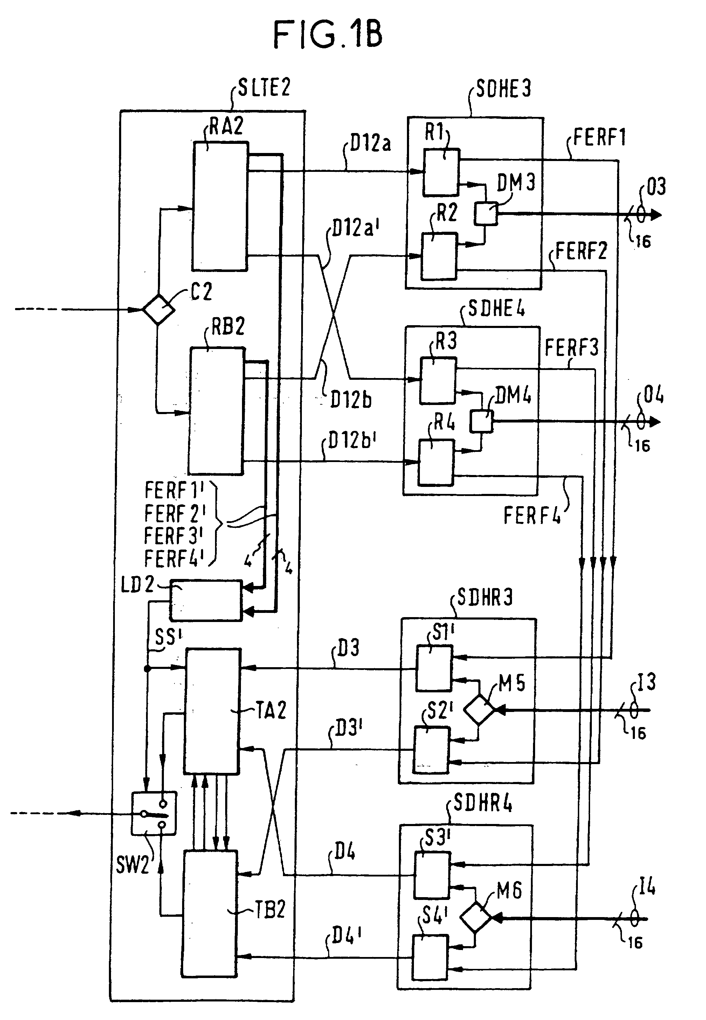

L'exemple de liaison sous-marine bidirectionnelle sécurisée qui est représenté sur les figures 1a, 1b permet la transmission de 5 Gb/s de données dans chaque sens, sur une ligne sous-marine de transmission optique L1 pour un premier sens de transmission, et sur une ligne sous-marine de transmission optique L2 pour un second sens de transmission. Chaque ligne L1 et L2 transmet des données avec un débit de 5 Gb/s, augmenté d'un surdébit de 0,3 Gb/s pour transmettre des données de service, propres à cette liaison sous-marine.

Cet exemple de réalisation correspond à n = 1. Il comporte :
- deux terminaux de liaison sous-marine SLTE1 et SLTE2, situés respectivement aux deux extrémités des lignes sous-marines L1 et L2 ;
- deux terminaux de réception SDH, référencés SDHR1 et SDHR2, pour recevoir respectivement seize multiplex SDH référencés I1 et seize multiplex SDH référencés I2 fournis par des lignes terrestres ;
- deux terminaux d'émission SDH, référencés SDHE1 et SDHE2, pour émettre respectivement seize multiplex SDH référencés O1 et seize multiplex SDH référencés O2 sur des lignes terrestres ;
- deux terminaux d'émission SDH, référencés SDHE3 et SDHE4 pour émettre seize multiplex SDH référencés O3 et seize multiplex SDH référencés O4 sur des lignes terrestres;
- et deux terminaux de réception SDH, référencés SDHR3 et SDHR4, pour recevoir respectivement seize multiplex SDH références I3 et seize multiplex SDH référencés I4, fournis par des lignes terrestres.

Généralement, les terminaux SDHE1 et SDHR1 sont regroupés dans un même équipement. De même, les terminaux SDHE2 et SDHR2 sont regroupés dans un même équipement.

Tous les terminaux de réception SDHR1, SDHR2, SDHR3, SDHR4, ont une même structure qui sera décrite de manière simplifiée. Par exemple, le terminal de réception SDHR1 comporte :
- une première entrée recevant les seize multiplex SDH référencés I1, qui sont d'ordre 1 et qui transportent chacun un conteneur virtuel d'ordre 4 ;
- une deuxième entrée recevant un signal FERF1' de défaillance à une extrémité éloignée;
- une troisième entrée recevant un signal FERF2' de défaillance à une extrémité éloignée;
- un dispositif M1 pour désencapsuler les seize conteneurs virtuels d'ordre quatre, leur rajouter un surdébit et constituer ainsi seize unités administratives d'ordre quatre, puis les multiplexer en un module de transport synchrone d'ordre seize ; ce dispositif M1 ayant une entrée recevant les seize multiplex I1 d'ordre un, et ayant deux sorties restituant chacune un module de transport synchrone d'ordre seize, ces deux modules transportant chacun le contenu des seize multiplex SDH, mais pouvant différer légèrement par les données constituant le surdébit ;
- un premier multiplexeur, S1, ayant : une entrée constituant la deuxième entrée du terminal de réception SDHR1, une seconde entrée reliée à une sortie du diffuseur M1, et une sortie constituant une première sortie du terminal de réception SDHR1 et fournissant un multiplex SDH d'ordre seize, D1a ;
- un second multiplexeur, S2, ayant : une première entrée reliée à la seconde sortie du diffuseur M1, une seconde entrée constituant la troisième entrée du terminal de réception SDHR1, et une sortie constituant une seconde sortie du terminal de réception SDHR1 et fournissant un multiplex SDH d'ordre seize, D1b.

Le multiplexeur S1 insére le signal FERF1' et des données de service SDH dans chaque trame d'ordre seize fournie à la première sortie, alors que le multiplexeur S2 insère le signal FERF2' et des données de service SDH dans chaque trame d'ordre seize fournie à la seconde sortie. La première et la seconde sortie du terminal de réception SDHR2 fournissent, de manière analogue, deux multiplex SDH d'ordre seize, D2a et D2b. La première et la seconde sortie du terminal de réception SDHR3 fournissent, de manière analogue, deux multiplex SDH d'ordre seize, D3 et D3'. La première et la seconde sortie du terminal de réception SDHR4 fournissent, de manière analogue, deux multiplex SDH d'ordre seize, D4 et D4'.

La duplication des données utiles dans les multiplex D1a et D1b, respectivement D2a et D2b, permet aux terminaux STLE1 et SLTE2 de remédier à une défaillance d'une partie de la liaison.

Tous les terminaux d'émission SDHE1, SDHE2, SDHE3, SDHE4, ont une même structure classique qui sera décrite de manière simplifiée. Par exemple, le terminal SDHE1 comporte :
- deux entrées recevant respectivement un multiplex SDH d'ordre seize, D34a, et un multiplex SDH d'ordre seize, D34b, fournis par le terminal de liaison sous-marine SLTE1, et qui sont identiques s'il n'y a aucune panne ;
- une première sortie fournissant le signal FERF1' de défaillance à une extrémité éloignée, ce signal étant actif si le multiplex D34a n'est plus reçu correctement ;
- une seconde sortie fournissant le signal FERF2' de défaillance à une extrémité éloignée, ce signal étant actif si le multiplex D34b n'est plus reçu correctement;
- une troisième sortie, multiple, fournissant les seize multiplex SDH référencés globalement O1, à des lignes terrestres;
- deux démultiplexeurs R1' et R2' qui démultiplexent les trames SDH d'ordre seize fournies par les multiplex D34a et D34b ; qui en extraient des données destinées à constituer la charge utile de seize trame SDH d'ordre un ; et qui produisent respectivement les signaux FERF1' et FERF2' dans le cas d'une mauvaise réception des multiplex D34a et D34b respectivement ;
- et un ensemble de seize sélecteurs, DM1, qui reçoit les données extraites par les démultiplexeurs R1' et R2', et les placent dans des trames SDH d'ordre un, pour constituer les seize multiplex SDH référencés O1.

Le terminal d'émission SDHE2 traite de manière analogue deux multiplex SDH d'ordre seize, D34a' et D34b', qui sont identiques entre eux en l'absence de panne. Le terminal d'émission SDHE3 traite de manière analogue deux multiplex SDH d'ordre seize, D12a et D12b, qui sont identiques entre eux en l'absence de panne. Le terminal d'émission SDHE4 traite de manière analogue deux multiplex SDH d'ordre seize, D12a' et D12b', qui sont identiques entre eux en l'absence de panne.

Les deux terminaux de liaison sous-marine SLTE1 et SLTE2, ont la même structure. Par exemple, le terminal SLTE1 comporte :
- deux dispositifs, TA1 et TB1, d'émission sur une ligne sous-marine, qui sont identiques et qui se secourent mutuellement, le dispositif TA1 ayant :
   -- deux entrées constituant deux entrées du terminal de liaison sous-marine SLTE1, qui sont reliées respectivement aux premières sorties des dispositifs de réception SDHR1 et SDHR2, pour recevoir respectivement les multiplex D1a et D2a ;
   -- deux entrées reliées à deux sorties de l'autre dispositif d'émission TB1 pour recevoir deux autres signaux de défaillance, FERF3', FERF4';
   -- deux sorties reliées respectivement à deux entrées de l'autre dispositif d'émission TB1 pour lui fournir les deux signaux de défaillance FERF1', FERF2';
   -- et une sortie fournissant un multiplex MRa;
      et le dispositif TB1 ayant :
   -- deux entrées constituant deux entrées du terminal de liaison sous-marine SLTE1, qui sont reliées respectivement aux secondes sorties des dispositifs de réception SDHR1 et SDHR2, pour recevoir respectivement les multiplex D1b et D2b;
   -- deux entrées reliées respectivement à deux sorties du dispositif d'émission TA1 pour recevoir les signaux de défaillance FERF1' et FERF2';
   -- deux sorties reliées à deux entrées du dispositif d'émission TA1, pour fournir les signaux de défaillance FERF3' et FERF4';
   -- et une sortie fournissant un multiplex MRb;
- un commutateur SW1 ayant : une entrée reliée à la sortie du dispositif d'émission TA1 fournissant le multiplex Mra, une entrée reliée la sortie du dispositif d'émission TB1 fournissant le multiplex MRb, une entrée de commande, et une sortie fournissant un signal optique à la ligne L1 ;
- un dispositif logique LD1 ayant : huit entrées et une sortie, cette dernière fournissant un signal de commande SS , et étant reliée : à l'entrée de commande du commutateur SW1, a une entrée du dispositif TA1, et à une entrée du dispositif TB1 ;
- un dispositif de recopie C1 ayant : une entrée reliée à la ligne L2, et ayant deux sorties fournissant, sous forme optique, deux copies du multiplex transmis par la ligne L2 ;
- et deux dispositifs de réception de ligne sous-marine, RA1 et RB1, identiques et qui se secourent mutuellement, chacun ayant : une entrée reliée à une sortie du dispositif de recopie C1 ; quatre premières sorties fournissant, respectivement à quatre entrées du dispositif logique LD1, quatre signaux de défaillance FERF1, FERF2, FERF3, FERF4, et deux secondes sorties fournissant deux copies identiques d'un multiplex SDH d'ordre seize.

Les secondes sorties du dispositif de réception RA1 fournissent respectivement les deux multiplex SDH D34a et D34a' transportant les données qui proviennent des multiplex I3 et I4. Les secondes sorties du dispositif de réception RB1 fournissent respectivement les multiplex SDH D34b et D34b' transportant, eux aussi, les données provenant des multiplex I3 et I4.

De manière analogue, les secondes sorties du dispositif de réception RA2 fournissent respectivement les deux multiplex SDH D12a et D12a' transportant les données qui proviennent des multiplex I1 et I2. Les secondes sorties du dispositif de réception RB2 fournissent respectivement les multiplex SDH D12b et D12b' transportant, eux aussi, les données provenant des multiplex I1 et I2.

Par exemple, le commutateur SW1 comporte un coupleur optique passif ayant : deux accès reliés respectivement à deux sorties optiques des dispositifs d'émission TA1 et TB1, et un accès relié à ligne L1. Les terminaux TA1 et TB1 comportent chacun un émetteur optique. La commande du commutateur SW1 est réalisée en alimentant l'un des emetteurs optiques et en éteignant l'autre. Les deux émetteurs optiques sont modulés respectivement par les multiplex MRa et MRb.

Le dispositif de recopie C1 est constitué d'un diviseur optique fournissant deux signaux optiques respectivement à deux entrées optiques des dispositifs de réception RA1 et RB1.

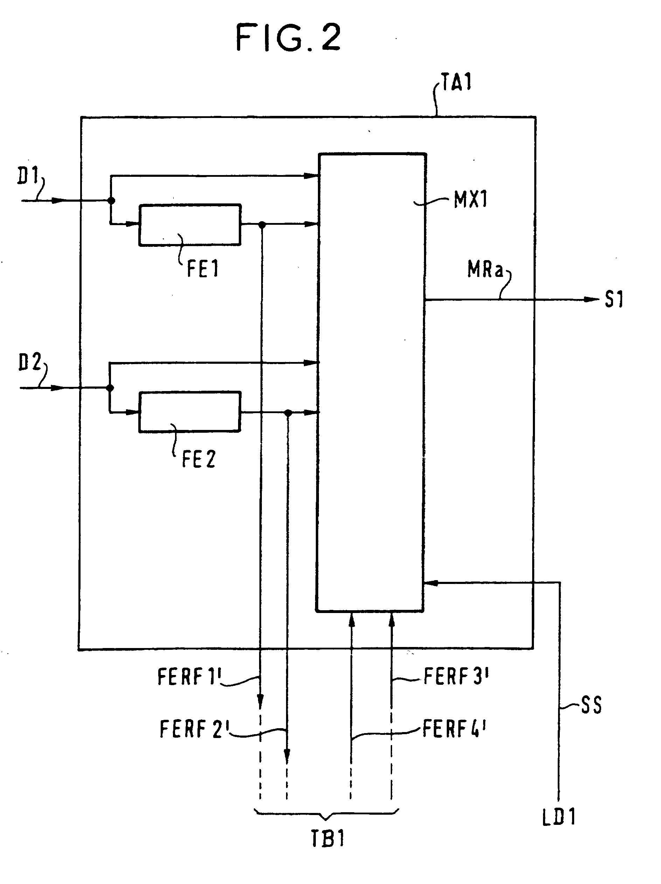

La figure 2 représente le schéma synoptique du dispositif d'émission TA1, à titre d'exemple. Les dispositifs d'émission TB1, TA2, TB2 ont des structures identiques. Le dispositif TA1 comporte :
- un dispositif FE1 d'extraction d'un signal de défaillance à l'extrémité éloignée, ayant une entrée reliée à la première entrée du dispositif TA1 pour extraire du multiplex D1a le signal FERF1' et le fournir notamment à une entrée du dispositif d'émission TB1;
- un dispositif FE2 d'extraction d'un signal de défaillance a l'extrémité éloignée, ayant une entrée reliée à la deuxième entrée du dispositif d'émission TA1 pour extraire un signal FERF2' et le fournir notamment à une entrée du dispositif d'émission TB1;
- un multiplexeur MX1 ayant : deux entrées reliées respectivement à la première et à la deuxième entrée du dispositif d'émission TA1, pour recevoir les multiplex D1a et D2a; deux entrées reliées respectivement aux sorties des dispositifs d'extraction FE1 et FE2; deux entrées reliées respectivement à deux autres entrées du dispositif d'émission TB1 pour recevoir deux autres signaux de défaillance à l'extrémité éloignée, FERF3' et FERF4'; une entrée reliée à la sortie du dispositif logique LD1 fournissant le signal SS commandant le commutateur SW1 ; et une sortie fournissant un multiplex obtenu en multiplexant les multiplex D1a et D2a, et des données de service propres à la liaison sous-marine sécurisée.

Selon un mode de réalisation préférentiel, ces données incluent les quatre signaux FERF1', FERF2', FERF3', FERF4'.

Les deux multiplex D1a et D2a conservent leur forme de trame SDH normalisée. Deux des signaux de défaillance, FERF1' et FERF2' sont donc transmis de manière redondante, puisqu'ils subsistent dans ces trames. Cette redondance n'a aucun inconvénient. Au contraire, il est avantageux de transmettre les quatre signaux de défaillance FERF1, FERF2, FERF3, FERF4, de la même manière. En effet, les dispositifs de réception RA2 et RB2 reçoivent ces quatre signaux de la même façon quelle que soit l'état du commutateur SW1. Il n'y a donc pas besoin de tenir compte d'un éventuel basculement du commutateur SW1.

Il est à noter aussi que le multiplexeur MX1 transmet la valeur du signal SS pour permettre au terminal distant de connaître l'état du commutateur SW1.

Selon un autre mode de réalisation, les signaux de défaillance FERF1', FERF2' sont transmis seulement dans les trames des multiplex MRa, MRb, alors que les signaux de défaillance FERF3', FERF4' sont transmis dans les données de service, pour un premier état du commutateur SW1. Les dispositifs de réception RA2 et RB2 comportent des moyens pour identifier les signaux de défaillance reçus, en fonction de l'état du commutateur SW1. Cet état est transmis parmi les données de service.

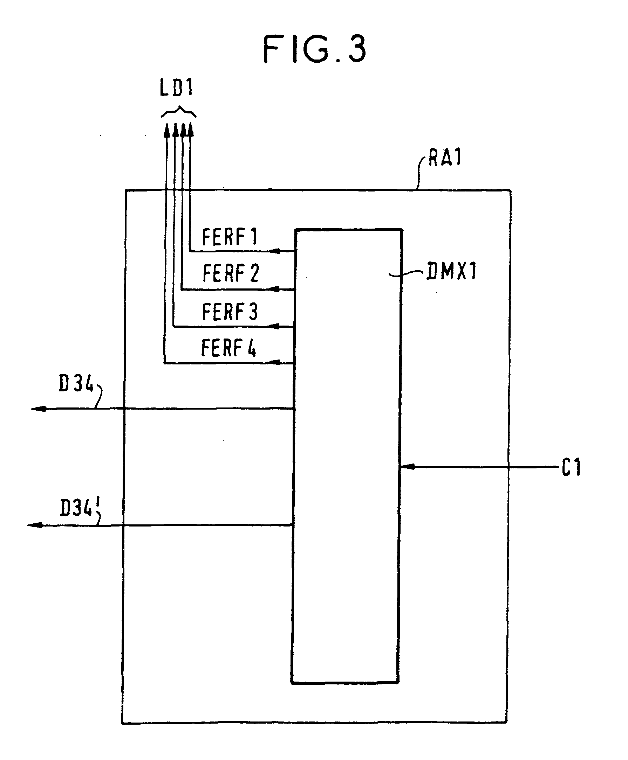

La figure 3 représente le schéma synoptique du dispositif de réception RA1 à titre d'exemple. Les autres dispositifs de réception RB1, RA2, RB2 ont des structures identiques. Le dispositif RA1 comporte un démultiplexeur DMX1 ayant : une entrée constituant l'entrée du dispositif RA1, quatre sorties fournissant, au circuit logique LD1, respectivement quatre signaux de défaillance à l'extrémité éloignée, FERF1, FERF2, FERF3, et FERF4; et deux sorties fournissant respectivement deux copies identiques D34 et D34' d'un multiplex SDH obtenu, à partir du multiplex reçu sur l'entrée du démultiplexeur DMX1, en éliminant les données de service propres à la liaison sous-marine.

Sur les figures 1a, 1b considérons le fonctionnement dans le cas où tous les éléments fonctionnent parfaitement, et où le commutateur SW1 est commandé de façon à transmettre le multiplex MRa fourni par le dispositif d'émission TA1, et où le commutateur SW2 est commandé de façon à transmettre un multiplex fourni par le dispositif d'émission TA2.

Les seize multiplex SDH d'ordre un, qui sont référencés I1, sont dupliqués par le diffuseur M1 puis sont multiplexes en un multiplex d'ordre seize, D1a, par le multiplexeur S1, d'une part, et en un multiplex d'ordre seize, D2a, par le multiplexeur S2, d'autre part. Les multiplexeurs S1 et S2 insèrent respectivement les signaux ce défaillance FERF1' et FERF2' dans les bits approriés des deux multiplex D1a et D1b. Ces multiplex D1a et D1b sont appliqués respectivement à des entrées des dispositifs d'émission TA1 et TB1 du terminal de transmission sous-marine SLTE1. Les deux dispositifs d'émission TA1 et TB1 fonctionnent simultanément, mais, dans cet exemple, le commutateur SW1 sélectionne seulement le multiplex MRa fourni par la sortie du dispositif TA1, pour le transmettre sur la ligne L1.

De manière analogue, le diffuseur M2 du terminal de réception SDHR2 duplique les seize multiplex SDH référencés I2. Le multiplexeurs S3 et S4 les transforment respectivement en un multiplex D2a d'ordre seize, et un autre multiplex D2b d'ordre seize. Les multiplexeurs S3 et S4 insèrent respectivement, dans les bits appropriés de ces deux multiplex , les signaux de défaillance FERF3' et FERF4'.Les multiplex SDH D2a et D2b sont appliqués respectivement à des entrées des dispositifs d'émission TA1 et TB1.

Comme cela est représenté sur la figure 2, le dispositif d'émission TA1 extrait les signaux FERF1' et FERF2' des multiplex D1a et D2a pour les communiquer au dispositif d'émission TB1. Symétriquement, le dispositif TB1 extrait les signaux FERF3' et FERF4' des multiplex D1b et D2b pour les communiquer au dispositif d'émission TA1. Dans le dispositif d'émission TA1, le multiplexeur MX1 multiplexe les deux multiplex D1a et D2a, et des données de service propres à la liaison sous-marine sécurisée, en insérant les signaux de défaillance FERF1', FERF2', FERF3', FERF4' parmi ces données. Ainsi le multiplex transmis sur la liaison sous-marine L1 comporte à la fois les données des multiplex I1 et I2, mais aussi les quatre signaux de défaillance émis par les démultiplexeurs R1', R2', R3', R4'. Il en est de même du multiplex que fournit le dispositif d'émission TB1. Ainsi, en cas de panne du dispositif TA1 ou du dispositif TA2, les quatre signaux de défaillance FERF1', FERF2', FERF3', FERF4' sont tous transmis néanmoins.

Le multiplex acheminé par la ligne sous-marine L1 est recopié par le diffuseur C2, du terminal SLTE2, en deux multiplex identiques, pour être appliqué identiquement aux deux dispositifs de réception RA2 et RB2 du terminal SLTE2. Ces deux dispositifs de réception fonctionnent de manière analogue au dispositif de réception RA1 représenté sur la figure 3. Chacun fournit, respectivement sur deux sorties, deux multiplex identiques D12 et D12' comportant toutes les donnnées des multiplex I1 et I2, et fournit sur quatre autres sorties les signaux de défaillance FERF1', FERF2', FERF3', FERF4' qui traduisent les défaillances constatées lors de la réception dans les dispositifs SDHE1 et SDHE2, à l'autre extrémité de la liaison.

Ces quatre signaux de défaillance sont appliqués au circuit logique LD2 du terminal SLTE2 pour commander le commutateur SW2 qui permet de sélectionner soit la sortie du dispositif d'émission TA2 soit la sortie du dispositif d'émission TB2 du terminal SLTE2. Ce dispositif logique LD2 calcule la fonction logique suivante :
(FERF1' ET FERF2') OU (FERF3' ET FERF4')
et il commande le commutateur SW2 pour transmettre le multiplex fourni par le dispositif TB2, si cette fonction logique prend la valeur 1 pendant une durée supérieure à une valeur fixée , par exemple 100 ms. La commutation peut en outre être fonction de signaux logiques supplémentaires signalant des pannes dans le terminal SLTE2.

Après une décision de basculement du commutateur SW2, son état est figée pendant une durée programmable, égale à une seconde par exemple, pour ignorer des phénomènes transitoires qui peuvent se produire juste après la commutation.

La sécurisation de la transmission dans l'autre sens est réalisée de manière analogue. Les multiplexeurs R1 et R2 du terminal SDHE3 fournissant respectivement les signaux de défaillance FERF1 et FERF2. Les multiplexeurs R3 et R4 du terminal SDHE4 fournissent respectivement les signaux de défaillance FERF3 et FERF4. Les signaux de défaillance FERF1, FERF2, FERF3, FERF4 sont acheminés par la ligne sous-marine L2 de manière analogue à ce qui a été décrit pour les signaux FERF1', FERF2', FERF3', FERF4'. Ils sont extraits par les dispositifs de réception RA1 et RB1, puis sont appliqués au circuit logique LD1 pour commander le commutateur SW1, de manière à le faire basculer si la fonction logique :
(FERF1 ET FERF2) OU (FERF3 ET FERF4) prend la valeur 1.

La portée de l'invention n'est pas limitée à des architectures où la redondance est de type 1+1, ele est applicable aussi à des architectures où la redondance est de type 1+n, avec n plus grand que un.

## Revendications

1. Terminal (SLTE1) pour une liaison bidirectionnelle sécurisée acheminant des données multiplexées selon la hiérarchie numérique synchrone, dite SDH, ce terminal (SLTE1) étant relié à un second terminal analogue (SLTE2) par une première et une seconde ligne de transmission (L1, L2) respectivement pour l'émission vers le second terminal et pour la réception en provenance du second terminal ;
**caractérisé en ce qu'**il comporte :
- deux dispositifs d'émission (TA1, TB1) pour recevoir chacun n premiers et n deuxièmes multiplex SDH (D1a, D2a; respectivement Dlb, D2b), n étant supérieur ou égal à un, chacun de ces multiplex SDH transportant respectivement l'un de n premiers et n deuxièmes signaux (FERF1', FERF2', FERF3', FERF4', dits de défaillance à l'extrémité éloignée de la liaison permettant de diagnostiquer une panne affectant des moyens au niveau du second terminal (SLTE2); chaque dispositif d'émission (TA1) comportant
-- des moyens (FE1, FE2) pour extraire, de chacun de ces n premiers et n deuxièmes multiplex SDH, respectivement les n premiers et n deuxièmes signaux (FERF1', FERF2') de défaillance à l'extrémité éloignée de la liaison;
-- des moyens (MX1) pour fournir un multiplex (MRa) susceptible d'être émis sur la première ligne (L1), en multiplexant : les n premiers et les n deuxièmes multiplex (D1a, D2a) reçus par ce dispositif d'émission(TA1), et des données de service propres à la liaison sécurisée, en insérant dans ces données n troisièmes et n quatrièmes signaux (FERF3', FERF4') de défaillance à l'extrémité éloignée de la liaison permettant de diagnostiquer une panne affectant des moyens au niveau du second terminal (SLTE2), ces 2n derniers signaux étant extraits par l'autre dispositif d'émission (TB1) ;
- un commutateur (SW1) pour transmettre à la première ligne (L1) l'un des deux multiplex (MRa, MRb) fournis respectivement par les deux dispositifs d'émission (TA1, TB1);
- deux dispositifs de réception (RA1, RB1) ayant chacun :
-- une entrée couplée à la seconde ligne (L2) pour recevoir un même multiplex transmis par cette seconde ligne, ce multiplex reçu transportant : n troisièmes et n quatrièmes multiplex SDH (D3, D4 ; ou D3',D4') comportant respectivement n cinquièmes et n sixièmes signaux (FERF1, respectivement FERF2) de défaillance à l'extrémité éloignée de la liaisons permattant de diagnostiquer une panne au niveau du terminal (SLTE1); et des données de service propres à la liaison sécurisée, ces données comportant n septièmes et n huitièmes signaux (FERF3, FERF4) de défaillance à l'extrémité éloignée de la liaisons permattant de diagnostiquer une panne au niveau du terminal (SLTE1);
-- des moyens (DMX1) pour extraire, du multiplex reçu, les n troisièmes et n quatrièmes multiplex SDH (D3, D4 ; ou D3',D4') et pour extraire les n cinquièmes, les n sixièmes, les n septièmes, et les n huitièmes signaux de défaillance (FERF1, FERF2, FERF3, FERF4);
- et un dispositif logique (LD1) pour recevoir les 4n signaux de défaillance fournis par chacun des deux dispositifs de réception (RA1, RA2) et en déduire un signal de commande du commutateur (SW1).

2. Terminal selon la revendication 1, **caractérisé en ce que** les moyens (MX1) pour multiplexer les n premiers, les n deuxièmes multiplex (D1a, D2a), et des données de service en un multiplex (MRa) susceptible d'être émis sur la première ligne (L1) en y insérant troisièmes et n quatrièmes signaux (FERF3', FERF4') sont aptes à insérer en outre les n premiers et les deuxièmes signaux (FERF1', FERF2') parmi les données de service propres à la liaison sécurisée.

3. Terminal selon la revendication 1, **caractérisé en ce que** les moyens (DMX1) pour extraire, du multiplex reçu, les n troisièmes et n quatrièmes multiplex SDH (D3, D4 ; ou D3',D4') et pour extraire les n cinquièmes, les n sixièmes, les n septièmes, et les n huitièmes signaux de défaillance (FERF1, FERF2, FERF3, FERF4), sont aptes à extraire ces n cinquièmes, n sixièmes, n septièmes, et n huitièmes signaux de défaillance (FERF1, FERF2, FERF3, FERF4) parmi les données de service propres à la liaison sécurisée.

## Claims

1. A terminal (SLTE1) for a bidirectional synchronous digital hierarchy SDH link with automatic protection switching conveying multiplexed data, this terminal (SLTE1) being connected to a second like terminal (SLTE2) by first and second transmission lines (L1, L2) for respectively sending to the second terminal and receiving from the second terminal; **characterized in that** it includes:
- two send devices (TA1, TB1) to each receive n first and n second SDH multiplexes (D1a, D2a; or D1b, D2b), where n is greater than or equal to 1, each of these SDH multiplexes respectively conveying n first and n second far end remote failure signals (FERF1', FERF2', FERF3', FERF4') of the link allowing the diagnosis of a fault affecting means at the second terminal (SLTE2); each send device (TA1) including:
-- means (FE1, FE2) for extracting from each of these n first and n second SDH multiplexes the n first and n second far end remote failure signals (FERF1', FERF2') of the link, respectively;
-- means (MX1) for supplying a multiplex (MRa) to be sent over the first line (L1) by multiplexing: the n first and n second multiplexes (D1a, D2a) received by this send device (TA1) and service data specific to the link with automatic protection switching, inserting into these data n third and n fourth far end remote failure signals (FERF3', FERF4') of the link allowing the diagnosis of a fault affecting means at the second terminal (SLTE2), the latter 2n signals being extracted by the other send device (TB1);
- an automatic protection switch (SW1) for transmitting to the first line (L1) one of the two multiplexes (MRa, MRb) respectively supplied by the two send devices (TA1, TB1);
- two receive devices (RA1, RB1) each having:
-- an input connected to the second line (L2) to receive the same multiplex transmitted by this second line, this received multiplex conveying: n third and n fourth SDH multiplexes (D3; D4; or D3', D4') respectively including n fifth and n-sixth far end remote failure signals (FERF1 or FERF2) of the link allowing the diagnosis of a fault at the terminal (SLTE1); and service data specific to the link with automatic protection switching, these data including n seventh and n eighth far end remote failure signals (FERF3, FERF4) of the link allowing the diagnosis of a fault at the terminal (SLTE1);
-- means (DMX1) for extracting from the received multiplex the n third and n fourth SDH multiplexes (D3, D4; or D3', D4') and for extracting the n fifth, n sixth, n seventh and n eighth failure signals (FERF1, FERF2, FERF3, FERF4); and
- a logic device (LD1) for receiving the 4n failure signals supplied by each of the two receive devices (RA1, RA2) and deducing therefrom an automatic protection switch control signal (SW1).

2. A terminal according to claim 1 **characterized in that** the means (MX1) for multiplexing the n first and the n second multiplexes (D1a, D2a) and service data to yield a multiplex (MRa) to be sent over the first line (L1) and inserting therein n third and n fourth signals (FERF3'), FERF4') are able to further insert the n first and the second signals (FERF1', FERF2') into the service data specific to the link with automatic protection switching.

3. A terminal according to claim 1 **characterized in that** the means (DMX1) for extracting from the received multiplex the n third and the n fourth SDH multiplexes (D3, D4; or D3', D4') and for extracting the n fifth, n sixth, n seventh and n eighth failure signals (FERF1, FERF2, FERF3, FERF4) are able to extract these n fifth, n sixth, n seventh and n eighth failure signals (FERF1, FERF2, FERF3, FERF4) from the service data specific to the link with automatic protection switching.

## Patentansprüche

1. Endgerät (SLTE1) für eine gesicherte bidirektionale, nach der synchronen digitalen Hierarchie multiplexierte Daten übermittelnde Verbindung, ein so genanntes SDH-Endgerät, wobei dieses Endgerät (SLTE1) mit einem zweiten analogen Endgerät (SLTE2) über eine erste und eine zweite Übertragungsleitung (L1, L2) verbunden ist, jeweils zum Senden an das zweite Endgerät und zum Empfang von dem zweiten Endgerät;
**dadurch gekennzeichnet, dass** es folgende Komponenten enthält:
- zwei Sendegeräte (TA1, TB1) zum Empfang der n ersten und n zweiten SDH-Multiplexe (D1a, D2a; bzw. D1b, D2b), wobei n größer oder gleich eins ist, und wobei jedes dieser SDH-Multiplexe jeweils eines der n ersten und n zweiten, so genannten Fehlersignale (FERF1', FERF2', FERF3', FERF4') an das entfernte Ende der Verbindung überträgt, durch das die Diagnose einer Störung möglich ist, die die Vorrichtungen im Bereich des zweiten Endgeräts (SLTE2) betrifft; wobei jedes Sendegerät (TA1) Folgendes beinhaltet:
- Vorrichtungen (FE1, FE2) zum Auslesen der n ersten und n zweiten Fehlersignale (FERF1', FERF2') aus jedem dieser n ersten und n zweiten SDH-Multiplexe am entfernten Ende der Verbindung;
- Vorrichtungen (MX1) zur Übertragung eines Multiplex (MRa), das über die erste Leitung (L1) übertragen werden kann, wobei gemultiplext werden: die n ersten und n zweiten Multiplexe (D1a, D2a), die von diesem Sendegerät (TA1) empfangen werden, und die für die gesicherte Verbindung spezifischen Servicedaten, indem die n dritten und n vierten Fehlersignale (FERF3', FERF4') am entfernten Ende der Verbindung in diese Daten eingefügt werden, wodurch die Diagnose einer Störung möglich ist, die die Vorrichtungen im Bereich des zweiten Endgeräts (SLTE2) betrifft; wobei diese letzteren 2n Signale von dem anderen Sendegerät (TB1) ausgelesen werden;
- einen Schalter (SW1) zur Übertragung eines der beiden Multiplexe (MRa, MRb), die jeweils von den beiden Sendegeräten (TA1, TB1) geliefert werden, an die erste Leitung (L1);
- zwei Empfangsgeräte (RA1, RB1), die jeweils beinhalten:
- einen Eingang, der mit der zweiten Leitung (L2) gekoppelt ist, um das gleiche Multiplex, das über diese zweite Leitung übertragen wird, zu empfangen, wobei dieses empfangene Multiplex überträgt: n dritte und n vierte SDH-Multiplexe (D3, D4; oder D3', D4'), bestehend jeweils aus n fünften und n sechsten Fehlersignalen (FERF1 bzw. FERF2) am entfernten Ende der Verbindung, wodurch die Diagnose einer Störung möglich ist, die die Vorrichtungen im Bereich des Endgeräts (SLTE1) betrifft; sowie die für die gesicherte Verbindung spezifischen Servicedaten, wobei diese Daten n siebte und n achte Fehlersignale (FERF3, FERF4) am entfernten Ende der Verbindung beinhalten, wodurch die Diagnose einer Störung möglich ist, die die Vorrichtungen im Bereich des Endgeräts (SLTE1) betrifft;
- Vorrichtungen (DMX1) zum Auslesen der n dritten und n vierten SDH-Multiplexe (D3, D4; oder D3', D4') aus dem empfangenen Multiplex und zum Auslesen der n fünften, der n sechsten, der n siebten und der n achten Fehlersignale (FERF1, FERF2, FERF3, FERF4);
- und eine logische Vorrichtung (LD1) zum Empfang der 4n Fehlersignale, die von jedem der beiden Empfangsgeräte (RA1, RA2) übertragen werden, und zur Ableitung eines Steuersignals für den Schalter (SW1).

2. Endgerät gemäß Anspruch 1, **dadurch gekennzeichnet, dass** die Vorrichtungen (MX1) zum Multiplexing der n ersten, der n zweiten Multiplexe (D1a, D2a) und der Servicedaten zu einem Multiplex (MRa), das über die erste Leitung (L1) übertragen werden kann, indem dort n dritte und n vierte Signale (FERF3', FERF4') eingefügt werden, in der Lage sind, außerdem die n ersten und die zweiten Signale (FERF1', FERF2') in die für die gesicherte Verbindung spezifischen Servicedaten einzufügen.

3. Endgerät gemäß Anspruch 1, **dadurch gekennzeichnet, dass** die Vorrichtungen (DMX1) zum Auslesen der n dritten und n vierten SDH-Multiplexe (D3, D4; oder D3', D4') aus dem empfangenen Multiplex und zum Auslesen der n fünften, n sechsten, n siebten und n achten Fehlersignale (FERF1, FERF2, FERF3, FERF4), in der Lage sind, diese n fünften, n sechsten, n siebten und n achten Fehlersignale (FERF1, FERF2, FERF3, FERF4) aus den für die gesicherte Verbindung spezifischen Servicedaten auszulesen.
